**Europäisches Patentamt**

**European Patent Office**

**Office européen des brevets**

(19)

(11) Veröffentlichungsnummer: **0 149 199**

**B1**

(12) # EUROPÄISCHE PATENTSCHRIFT

(45) Veröffentlichungstag der Patentschrift:
02.09.87

(21) Anmeldenummer: **84116002.1**

(22) Anmeldetag: **20.12.84**

(51) Int. Cl.⁴: **A 47 J 31/54**

(54) **Elektrischer Durchlauferhitzer für Kaffeemaschinen.**

(30) Priorität: **20.12.83 DE 8336499 U**
**02.02.84 DE 8403003 U**

(43) Veröffentlichungstag der Anmeldung:
**24.07.85 Patentblatt 85/30**

(45) Bekanntmachung des Hinweises auf die Patenterteilung:
**02.09.87 Patentblatt 87/36**

(84) Benannte Vertragsstaaten:
**DE**

(56) Entgegenhaltungen:
**EP-A-0 106 914**
**DE-A-2 530 967**
**DE-A-2 551 779**
**DE-B-2 530 296**
**DE-B-2 741 446**

(73) Patentinhaber: **ELPAG AG CHUR, Quaderstrasse 11,
CH- 7001 Chur (CH)**

(72) Erfinder: **Bleckmann, Ingo. Dipl.- Ing.Dr.mont,
Iganz- Rieder- Kai 11, A-5020 Salzburg (AT)**

(74) Vertreter: **Liedl, Gerhard, Steinsdorfstrasse 21 - 22,
D-8000 München 22 (DE)**

## Beschreibung

Die Erfindung betrifft einen Durchlauferhitzer für eine Kaffemaschine nach den Merkmalen des Oberbegriff es des Anspruchs 1.

Es sind z.b. aus der nicht zum Stand den Technik gemäß Artikel 54 (2) zählenden EP-A-0 106 914 elektrische Durchlauferhitzer für Kaffeemaschinen bekannt geworden, bei denen ein Rohrheizkorper und ein Wasserrohr auf einem Montageblech befestigt sind. Das Montageblech wird von einer Spannschraube von unten her in Richtung auf eine Abstellplatte für eine Kaffeemaschine gedrückt, wobei dann der Rohrheizkörper an der Abstellplatte anliegt, während das Wasser rohr sich im Abstand von derselben befindet. Der Wasserrohrbogen ist dabei außerhalb der Rohrheizkörperschleife angeordnet.

Bei Durchlauferhitzern der bekannten Art treten in der Praxis Schwierigkeiten bei der Temperatursteuerung auf. Der Rohrheizkörper hat einerseits die Aufgabe, die Wassersäule im Wasserrohr so auf Siedetemperatur zu erhitzen, daß diese durch einen Auslauf oberhalb des Kaffeefilters gedrückt wird. Andererseits sollen die Abstellplatte und die darauf abgestellte Kaffeekanne so vorgewärmt werden, daß bereits die ersten Filtrattropfen nicht abgekühlt werden und daß auch nach Durchlauf des gesamten für den Brühvorgang benötigten Wassers der in der abgestellten Kaffeekanne enthaltene Kaffee über einen längeren Zeitraum warmgehalten wird, z. B. über eine Stunde auf einer Temperatur von über 80° C verbleibt.

Wenn Temperaturfühler innerhalb der Rohrheizkörperschleife angeordnet werden, registriert der oder die Temperaturfühler nicht den Füllungsgrad des Wasserrohres, was zu einer unregelmäßigen Wasserförderung mit Dampfbildung, zu schnorchelnden Geräuschen und unnötigem Engergieverbrauch führt.

Aus der DE-A- 2 551 779 ist ein elektrischer Durchlauferhitzer gemäß Oberbegriff des Anspruchs 1 bekannt, dessen Rohrheizkörper außerhalb eines Wasserrohrbogens angeordnet ist und diesen umschließt. Innerhalb des Wasserrohrbogens sind an dem Montageblech Temperaturregeleinrichtungen und/oder Überlastsicherungen angeordnet.

Bei dieser Ausführungsform ist zwar gewährleistet, daß die Temperaturregeleinrichtungen auf die Temperatur des Wasserrohres und damit auf den Füllungsgrad desselben ansprechen. Die Ausführungsform hat jedoch den Nachteil, daß die vom Rohrheizkörper entwickelte Wärme in den mittleren Bereich des Wasserrohres und damit überwiegend in den über der Wasseroberfläche stehenden Dampfraum eingespeist wird, woraus sich wiederum ein unregelmäßiger Gang der Kaffeemaschine mit schnorchelnden Geräuschen und mit unnötigem Energieverbrauch ergibt. Bei etwa sechs Tassen eingefülltem Frischwasser werden bei Maschinen dieser Gattung nur etwa vier Tassen Kaffee erzeugt. Ein weiterer Nachteil liegt darin, daß die Abstellplatte für die Kaffeemaschine nicht unmittelbar vom Rohrheizkörper erwärmt wird und daß das Wasserrohr nicht von dieser Platte abgesetzt ist.

Der Erfindung liegt daher die Aufgabe zugrunde, einen Durchlauferhitzer der in Rede stehenden Art so auszubilden, daß einerseits die von dem Rohrheizkörper erzeugte Wärme möglichst von unten in das Wasserrohr eingespeist wird, so daß eine unnötige Dampfbildung verhindert, Energie eingespart und das Betriebsverhalten des Durchlauferhitzers verbessert wird, daß andererseits jedoch der Rohrheizkörper zwecks Vorheizung des Kaffeekannenbodens und Warmhaltung des zubereiteten Getränks unmittelbar an der Unterseite der Abstellplatte für die Kaffeekanne anliegt und daß bei dieser Anordnung trotzdem ein sicheres Ansprechen der die Stromzufuhr zu dem Rohrheizkörper regelnden Temperaturfühler oder der Überlastsicherungen gewährleistet ist.

Die Lösung dieser Aufgabe ergibt sich aus den kennzeichnenden Merkmalen des Anspruches 1. Die anbhängigen Ansprüche 2-11 beschreiben bevorzugte Ausführungsformen.

Auf der Zeichnung sind bevorzugte Ausführungsformen der Erfindung dargestellt. Es zeigen:

Fig. 1 schematisch eine Schnittansicht einer Kaffeemaschine mit einem Durchlauf erhitzer gemäß der Erfindung;

Fig. 2 in vergrößertem Maßstab einen Schnitt durch eine weitere Ausführungsform des Durchlauferhitzers;

Fig. 3 ähnlich wie in Fig. 2 einen Schnitt einer dritten Ausführungsform eines Durchlauferhitzers;

Fig. 4 eine Draufsicht auf eine weitere Ausführungsform eines Durchlauferhitzers;

Fig. 5 einen Schnitt längs der Linie V-V in Fig. 4;

Fig. 6 eine Draufsicht auf eine weitere Ausführungsform eines Durchlauferhitzers;

Fig. 7 einen Schnitt längs der Linie VII-VII in Fig. 6.

Eine Kaffeekanne 1 wird auf einer Abstellplatte 2 abgestellt. An die Unterseite der Abstellplatte 2 wird ein Rohrheizkörper 3 angedrückt, und zwar durch die Wirkung einer Spannschraube 4, die in eine domartige Wölbung 5 eines Montagebleches 6 eingreift.

Das Montageblech 6 ist schalenförmig ausgebildet, so daß bei einem Durchbrennen des Rohrheizkörpers 3 und Abschmelzen oder Absprühen von Metall sich dieses auf dem Schalenboden sammeln kann. Im Schalenboden ist eine rinnenförmige Vertiefung ausgedrückt, in welche ein Wasserrohr 8 eingelegt ist. Das Wasserrohr 8 ist einerseits an einen nicht dargestellten Wasservorratsbehälter und andererseits über ein ebenfalls nicht dargestelltes Steigrohr mit einem Auslauf 10 verbunden. Die hochgebogenen Ränder 9 des Montagebleches 6 verlaufen im Abstand von dem Rohrheizkörper 3 und stützen das z. B. aus Kunststoff bestehende Gehäuse der Maschine beim Durchbrennen des Rohrheizkörpers 3.

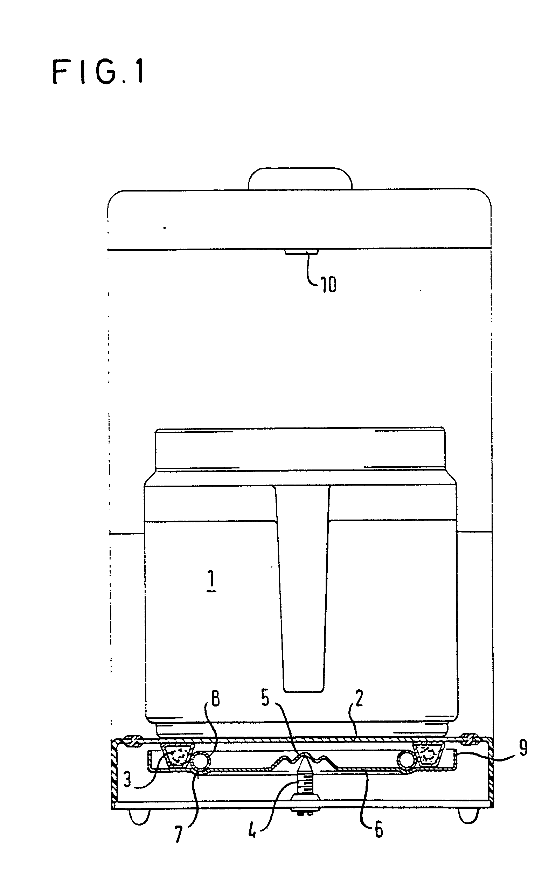

Die in Fig. 1 ohne die erfindungsgemäße Anordnung eines sich gegen die Abstellplatte 2 eweiternden keilförmigen Spalt dargestellte gegenseitige Anordnung von Wasserrohrbogen 8 und Rohrheizkörper 3 gehört nicht zur Erfindung.

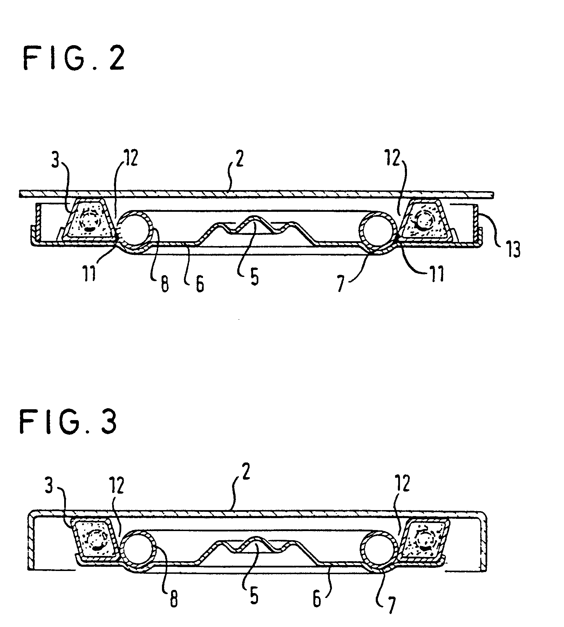

Die in Fig. 2 dargestellte Ausführungsform unterscheidet sich von der Ausführungsform gemäß Fig. 1 dadurch, daß der im Querschnitt trapezförmig ausgebildete Rohrheizkörper 3 mit seiner schmaleren Oberkante an der Unterseite der Abstellplatte 2 anliegt. Dadurch ergibt sich eine im Fußpunkt linienförmige Berührung zwischen dem Rohrheizkörper 3 und dem Wasserrohr 8 bei 11. Der Rohrheizkörper kann mit dem Wasserrohr längs dieser Linie 11 verlötet sein. Von der Linie 11 nach oben entsteht ein keilförmiger Spalt 12. Dieser hat zur Folge, daß die Wärme vom Rohrheizkörper über die Linie 11 und die rinnenförmige Vertiefung 7 auf das Wasserrohr 8 übertragen wird. Die Wärmeeinspeisung in das Wasserrohr 8 erfolgt also von unten. Dadurch wird eine unnötige Aufheizung des Dampfraumes im Wasserrohr 8 vermieden. Die Maschine arbeitet daher energiesparend und frei von sogenannten Schnorchelgeräuschen. Trotzdem wird bei dieser Lösung die über dem Wasser rohr 8 liegende Abstellplatte 2 bevorzugt beheizt. Ein weiterer Unterschied gegenüber der Ausführungsform der Fig. 1 ergibt sich durch das Einsetzen eines Schutzringes 13, der das im allgemeinen aus Kunststoff bestehende Gehäuse der Kaffeemaschine beim Durchbrennen des Rohrheizkörpers 3 schützt.

Bei der Ausführungsform gemäß Fig. 3 besitzt der Rohrheizkörper 3 einen Querschnitt in Form eines Schrägparallelogramms. Der Rohrheizkörper wird so eingesetzt, daß er nach außen und oben vom Wasserrohr 8 zurückweicht, so daß sich daher wieder der bevorzugte keilförmige Spalt 12 ergibt. Anstelle des Schutzringes 13 sind die Ränder der Abstellplatte 2 nach unten abgebogen.

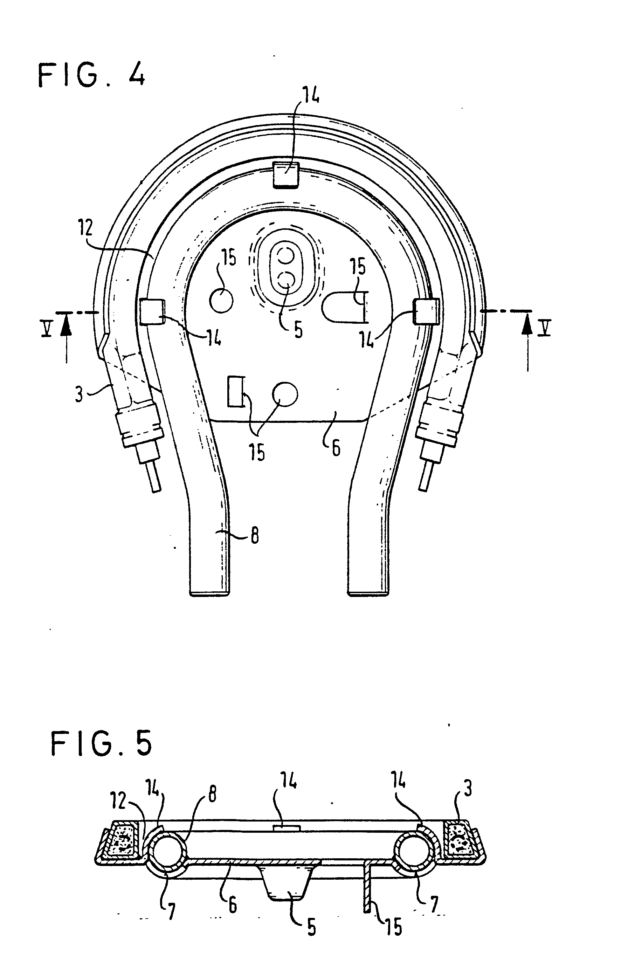

Bei der in Fig. 4 dargestellten Ausführungsform wird das Wasserrohr 8 durch aus dem Montageblech 6 ausgedrückte Lappen 14 in der rinnenförmigen Vertiefung 7 gehalten. Durch die Anordnung der Lappen ergibt sich ein etwas verbreiterter, keilförmig sich nach oben erweiternder Spalt 12 mit optimaler Wärmeleitung vom Rohrheizkörper 3 in das Wasserrohr 8. Nicht dargestellte, jedoch bekannte Temperaturfühler und/oder Überlastsicherungen werden in die dafür vorgesehenen Halterungen 15 eingesetzt.

Durch die Anordnung ergibt sich zwangsläufig, daß die Temperaturfühler auf die Temperatur im Wasserrohr 8 ansprechen und so eine optimale Regelung der Wassererhitzung ermöglichen. Nach dem Auslauf des Wassers ergibt sich ein unmittelbarer Wärmefluß vom Rohrheizkörper 8 auf die Temperaturfühler 17 und daher ein taktweises Einschalten des Rohrheizkörpers 3 mit einer optimalen Warmhaltetemperatur des in der Kaffeekanne 1 enthaltenen Kaffees.

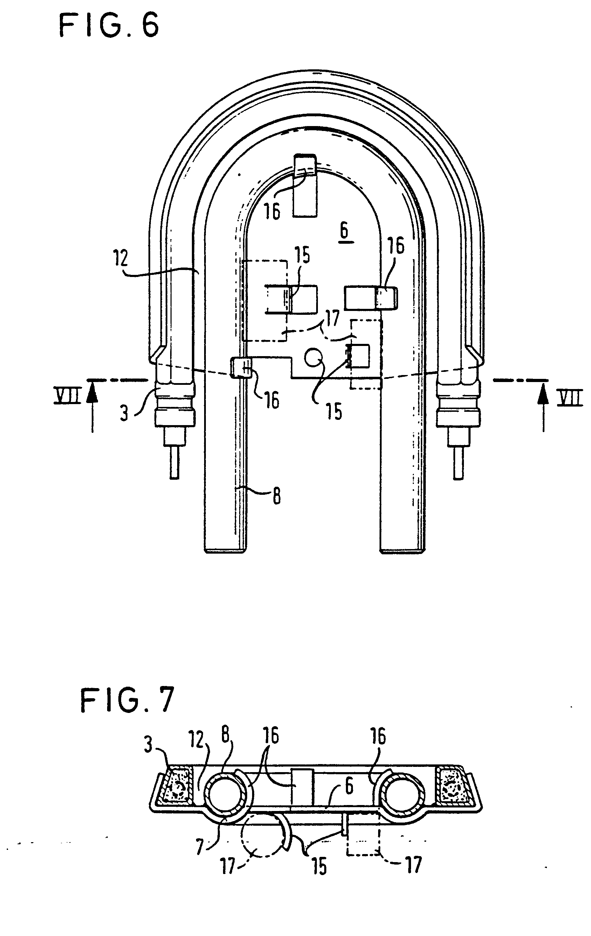

Bei der in den Figuren 6 und 7 dargestellten Ausführungsform sind aus dem Montageblech 6 Lappen 16 ausgestanzt, die das Wasserrohr 8 von innen her in die rinnenförmige Vertiefung 7 des Montagebleches drücken. Bei dieser Lösung kann der keilförmige Spalt 12 etwas schmaler gehalten sein als bei der Ausführungsform gemäß den Figuren 4 und 5. Die Ausführungsform zeigt, daß man die Breite des keilförmigen Spaltes 12 sehr exakt einregulieren kann, um einen optimalen Wärmeübergang auf das Wasserrohr 8, und zwar bei einer Wärmeeinspeisung von unten her, zu erzielen.

Der Mantel des Rohrheizkörpers 3, das Montageblech 6 und das Wasserrohr 8 bestehen vorzugsweise aus einem mit Aluminium beschichteten Stahl. Diese Stähle haben einerseits den Vorteil der leichten und guten Verlötbarkeit. Andererseits sind sie hochtemperaturbeständig.

Die dargestellten Ausführungsformen haben den Vorteil, daß die Wärmeeinspeisung in die Kaffeekanne 1 über einen ziemlich weit außen liegenden Ringbereich erfolgt. Durch die Konvektionsströmung wird der Wärmeverlust über die Seitewände der Kaffeekanne 1 ausgeglichen. Bei vorgegebener Gesamtgröße des Durchlauferhitzers ist der Rohrheizkörper 3 länger im Vergleich zu einer Anordnung, bei der der Rohrheizkörper innerhalb des Wasserrohrbogens angeordnet wird. Damit nimmt entweder bei vorgegebener Belastung die Heizleistung pro Längeneinheit ab mit der Folge einer niedrigeren Oberflächentemperatur und einer längeren Lebensdauer oder es kann die Belastung gesteigert werden mit dem Vorteil einer rascheren Zubereitung des Aufgußgetränkes und einer besseren Warmhaltefunktion für das fertiggestellte Aufgußgetränk. Da das Wasserrohr 8 kürzer als der Rohrheizkörper 3 ist, wird pro Längeneinheit desselben mehr Wärme übertragen im Vergleich zu einer Lösung mit außen liegendem Wasserrohr. Dies führt zu einem ruhigen Gang der Maschine unter Vermeidung schnorchelnder Austrittsgeräusche.

Als Temperaturfühler 17, die an den Halterungen 15 befestigt werden, eignen sich Bimetallschalter oder PTC-Elemente - also Widerstände mit positivem Temperaturgradienten. Als Überlastsicherungen dienen Schmelzsicherungen.

**Patentansprüche**

1. Elektrischer Durchlauferhitzer für Kaffeemaschinen oder ähnliche Haushaltsgeräte zur Herstellung von Aufgußgetränken, bestehend aus einer hufeisenförmig oder kreisrund gebogenen Rohrheizkörperschleife (3), einem ähnlich geformten und seitlich an demselben angeordneten Wasserrohrbogen (8) sowie einem diese Teile tragenden und miteinander verbindenden Montageblech (6), wobei der Rohrheizkörper (3) und das Wasserrohr (8) in dem Zwischenraum zwischen einer Abstellplatte (2) für eine Kaffeekanne (1) und dem Montageblech (6) angeordnet sind, wobei die Rohrheizkörperschleife (3) außerhalb des Wasserrohrbogens (8) angeordnet ist und diesen umschließt, und wobei innerhalb des Wasserrohrbogens (8) an dem Montageblech (6) Temperaturregeleinrichtungen und/oder Überlastsicherungen (15, 17) angeordnet sind dadurch gekennzeichnet, daß die Mittelachse des Wasserrohrs (8) einen größeren Abstand von der Unterseite der Abstellplatte (2) hat als die Mittelachse des Rohrheizkörpers (3), daß der Rohrkeizkörper (3) an der Unterseite der Abstellplatte (2) anliegt und daß zwischen der dem Wasserrohr (8) zugewendeten Seitenfläche des Rohrheizkörpers (3) und dem Wasserrohr (8) ein gegen die Abstellplatte (2) sich erweiternder keilförmiger Spalt (12) gebildet ist.

2. Elektrischer Durchlauferhitzer nach Anspruch 1, dadurch gekennzeichnet, daß der Rohrheizkörper (3) mit dem Wasserrohr (8) und dem Montageblich (6) längs einer Fußlinie verlötet oder verschweißt ist.

3. Elektrischer Durchlauferhitzer nach Anspruch 1, dadurch gekennzeichnet, daß das Wasserrohr (8) in einer rinnenförmigen Vertiefung (7) des Montagebleches (6) angeordnet ist.

4. Elektrischer Durchlauferhitzer nach Anspruch 1, dadurch gekennzeichnet, daß die Ränder (9) des Montagebleches (6) in Richtung auf die Unterseite der Abstellplatte (2) aufgebogen sind und die nach außen gerichtete Fläche des Rohrheizkörpermantels (3) abdecken.

5. Elektrischer Durchlauferhitzer nach Anspruch 4, dadurch gekennzeichnet, daß die auf gebogenen Ränder (9) des Montagebleches (6) im Abstand von der Außenfläche des Rohrheizkörpers (3) verlaufen.

6. Elektrischer Durchlauferhitzer nach einem der Ansprüche 1 bis 5, dadurch gekennzeichnet, daß ein außerhalb des Rohrheizkörpers angeordneter Schutzring (13) vorgesehen ist, der den Zwischenraum zwischen dem Abstellplatte (2) und der Montageblech (6) wenigstens teilweise verschließt.

7. Elektrischer Durchlauferhitzer nach Anspruch 6, dadurch gekennzeichnet, daß der Schutzring von einem von der Abstellplatte (2) nach unten abgebogenen Steg gebildet ist.

8. Elektrischer Durchlauferhitzer nach einem der Ansprüche 1 bis 7, dadurch gekennzeichnet, daß der Rorheizkörper (3) einen trapezförmigen Querschnitt besitzt.

9. Elektrischer Durchlauferhitzer nach Anspruch 8, dadurch gekennzeichnet, daß aus dem Montageblech (6) Lappen (14, 16) ausgestanzt sind, durch welche das Wasserrohr (8) in die rinnenförmige Vertiefung (7) des Montagebleches (6) eingedrückt wird.

10. Elektrischer Durchlauferhitzer nach Anspruch 8, dadurch gekennzeichnet, daß das Montageblech (6), das Wasserrohr (8) und/oder der Rohrheizkörper (3) aus einem mit Aluminium beschichteten Stahl besteht.

11. Elektrischer Durchlauferhitzer nach Ansprüchen 1 bis 10, dadurch gekennzeichnet, daß das Montageblech (6) schalenförmig mit einer Wölbung (5) zum Eingriff einer Spannschraube (4) ausgebildet ist.

## Claims

1. An electric continous flow heater for coffee making machines or smilar household appliances for producing infusion beverages, said heater consisting of a tubular heater loop (3) bent to horseshoe or circular configuration, a similarly shaped water pipe bend (8) disposed alongside said tubular heater loop, and a mounting metal sheet (6) supporting and joining the aforesaid components, wherein the tubular heater (3) and the water pipe (8) are disposed within the space between a setting-down plate (2) for a coffee pot (1) and the mounting metal sheet (6), wherein the tubular heater loop (3) is disposed on the outside of and encloses the water pipe bend (8), and wherein temperature regulating devices and/or overload fuses (15, 17) are mounted on the mounting metal sheet (6) inside the water pipe bend, characterized in that the centre axis or the water pipe (8) is at a greater distance from the underside of the setting down plate (2) than is the centre axis of the tubular heater (3), that the tubular heater (3) bears against the underside of the setting-down plate (2), and that a wedge-shaped gap (12) is formed between the side surface of the tubular heater (3) facing the water pipe (8) and the water pipe (8), said gap becoming wider along the direction towards the setting-down plate (2).

2. An electric continous flow heater according to claim 1, characterized in that the tubular heater (3) is soldered or welded to the water pipe (8) and to the mounting metal sheet (6) along a base line.

3. An electric continous flow heiter according to claim 1, characterized in that the water pipe (8) is disposed whithin a channel-shaped recess (7) of the mounting metal sheet (6).

4. An electric continous flow heater according to claim 1, characterized in that the rim portions (9) of the mounting metal sheet (6) are bent uppwards in the direction towards the underside of the setting-down plate (2) and cover the outwardly facing surface of the tubular heater jacket (3).

5. An electric continous flow heater according to claim 4, characterised in that the upwardly bent rim portions (9) of the mounting metal sheet (6) are spaced from the outer surface of the tubular heater (3).

6. An electric continous flow heater according to any one of claims 1 to 5, characterized in that a guard ring (13) is provided and disposed outside the tubular heater, said guard ring at least partially confining the space between the setting-down plate (2) and the mounting metal sheet (6).

7. An electric continous flow heater according to claim 6, characterized in that the guard ring is formed by an arm that is down wardly bent from the setting-down plate (2).

8. An electric continous flow heater according to any one of claims 1 to 7, characterized in that the tubular heater (3) is of trapezium-shaped cross-section.

9. An electric continous flow heater according to claim 8, characterized in that lugs (14, 16) have been formed in the mounting metal sheet (6) by punching, the water pipe (8) being pressed into the channel-shaped recess (7) of the mounting metal sheet (6) by said lugs.

10. An electric continous flow heater according to claim 8, characterized in that the mounting metal sheet (6), the water pipe (8) and/or the tubular heater (3) consist of an aluminium-coated steel.

11. An electric continous flow heater according to any one of claims 1 to 10, characterized in that the mounting metal sheet (6) is formed to be dish-shaped having a convexity (5) for engagement with a tightening screw (4).

**Revendications**

1. Chauffe eau électrique instantané pour cafetières électriques ou appareils ménagers analogues pour fabriquer des boissons infusées, constitué par une boucle de corps tubulaire chauffant (3) coudée en forme de fer à cheval ou de cercle, un tube d'eau (8) de forme analogue disposé sur le côté de celui-ci et par une plaque de montage en tôle (6) portant ces éléments et les reliant ensemble, le corps tubulaire chauffant (3) et le tube d'eau (8) étant disposés dans le volume intermédiaire entre une plaque support (2) pour une verseuse (1) et la plaque de montage en tôle (6), la boucle du corps tubulaire chauffant (3) étant disposée à l'extérieur du coude du tube d'eau (8) et entourant celui-ci, et des dispositifs de réglage de température et/ou des coupe-circuits (15, 17) étant disposés à l'intérieur du coude du tube d'eau (8) sur la plaque de montage en tôle (6), caractérisé en ce que l'axe médian du tube d'eau (8) est à une plus grande distance du côté inférieur de la plaque support (2) que l'axe médian du corps tubulaire chauffant, en ce que le corps tubulaire chauffant (3) appuie sur le côté inférieur de la plaque support (2) et en ce qu'entre la surface latérale du corps tubulaire chauffant (3) tournée vers le tube d'eau (8) et le tube d'eau (8) est formé un intervalle (12) en forme de coin s'élargissant vers la plaque support (2).

2. Chauffe-eau électrique instantané selon la revendication 1, caractérisé en ce que le corps tubulaire chauffant (3) est brasé ou soudé sur le tube d'eau (8) et la plaque de montage en tôle (6) le long d'une ligne de base.

3. Chauffe-eau électrique instantané selon la revendication 1, caractérisé en ce que le tube d'eau (8) est placé dans une cavité (7) en forme de gouttière de la plaque de montage en tôle (6).

4. Chauffe-eau électrique instantané selon la revendication 1, caractérisé en ce que les bords (9) de la plaque de montage en tôle (6) sont coudés en direction du côté inférieur de la plaque support (2) et recouvrent la surface de l'enveloppe du corps tubulaire chauffant (3) orientée vers l'extérieur.

5. Chauffe-eau électrique instantané selon la revendication 4, caractérisé en ce que les bords coudés (9) de la plaque de montage en tôle (6) s'étendent à une certaine distance de la surface extérieure du corps tubulaire chauffant (3).

6. Chauffe-eau électrique instantané selon l'une des revendications 1 à 5, caractérisé en ce qu'on prévoit une bague de protection (13) disposée à l'extérieur du corps tubulaire chauffant, qui ferme au moins partiellement le volume intermédiaire entre la plaque support (2) et la plaque de montage en tôle (6).

7. Chauffe-eau électrique instantané selon la revendication 6, caractérisé en ce que la bague de protection est formée par un bandeau de la plaque support (2) coudé vers le bas.

8. Chauffe-eau électrique selon l'une des revendications 1 à 7, caractérisé en ce que le corps tubulaire chauffant (3) a une section transversale trapézoïdale.

9. Chauffe-eau électrique instantané selon la revendication 8, caractérisé en ce qu'on estampe dans la plaque de montage en tôle (6) des pattes (14, 16) à l'aide desquelles le tube d'eau (8) est pressé dans la cavité (7) en forme de gouttière de la plaque de montage en tôle (6).

10. Chauffe-eau électrique selon la revendication 8, caractérisé en ce que la plaque de montage en tôle (6), le tube d'eau (8) et/ou le corps tubulaire chauffant (3) sont en un acier revêtu d'aluminium.

11. Chauffe-eau électrique selon les revendications 1 à 10, caractérisé en ce que la plaque de montage en tôle (6) est réalisée en forme de cuvette avec un renfoncement bombé (5) permettant la venue en prise d'une vis de serrage (4).

# FIG.1

# FIG. 2

# FIG. 3

# FIG. 4

# FIG. 5

# FIG. 6

# FIG. 7